# EUROPEAN PATENT SPECIFICATION

(11) **EP 1 550 566 B1**
(45) Date of publication and mention of the grant of the patent: **25.06.2008**
(21) Application number: 03723403.6
(22) Date of filing: 26.05.2003
(51) Int. Cl.: B60C 17/04, B60C 17/10

(54) **RUN-FLAT SUPPORT**
NOTLAUF-STÜTZRING
APPUI DE ROULAGE A PLAT POUR VEHICLE

(30) Priority: 28.05.2002 JP 2002154354; 22.10.2002 JP 2002306448; 04.02.2003 JP 2003026955
(43) Date of publication of application: 06.07.2005
(73) Proprietor: Topy Kogyo Kabushiki Kaisha, Tokyo 102-8448 (JP)
(72) Inventor: KIMURA, Yoshiaki c/o Topy Kogyo Kabushiki Kaisha,, Tokyo 102-8448 (JP); ITO, Takahiko c/o Topy Kogyo Kabushiki kaisha,, Tokyo 102-8448 (JP); KAINOSE, Takashi, Tatebayashi-shi, Gunma 374-0026 (JP); SETO, Masahiro, Hiki-gun, Saitama 355-0300 (JP)
(74) Representative: Paget, Hugh Charles Edward
(86) International application number: PCT/JP2003/006540
(87) International publication number: WO 2003/099591

(56) References cited:
- JP-A- 3 121 913
- JP-A- 6 344 733
- JP-U- 3 107 204
- US-A- 4 346 747
- US-A1- 2001 052 379

## Description

### Field of the Invention

The present invention relates to a core housed inside a tire and fastened to a wheel rim so that even when the tire is punctured (so that it becomes flat), the core supports the tire from inside to thereby cause a vehicle to be able to run further than it could without the core (hereinafter, a run-flat core).

### Background of the Invention

A run-flat tire is being developed from the following two viewpoints:
(1) A spare tire can be omitted, accompanied by the following advantages:
   Economy of energy: The weight of a vehicle is decreased and fuel economy is improved. As a result, a tire manufacturing energy is decreased.
   Space-saving: The spare tire mounting space is available for other use.
   Decrease in cost: The spare tire, the wheel for mounting the tire, the tool associated with the spare and the jack can be omitted.
(2) Security of a driver is assured, accompanied by the following advantages:
   A driver is not exposed to crime or other danger because the vehicle can run further even when a tire-puncture happens.
   It is important for some vehicles such as vehicles for VIPs, emergency vehicles including patrol cars and ambulances, and vehicles for physically handicapped persons to run even when a tire is punctured.
   It accommodates the increase in the number of drivers who cannot change a tire.
   Two types of conventional run-flat tires are known: a first type or core-type (hereinafter, type A) and a second type or side wall reinforced-type (hereinafter, type B). Type A (Core-type):
      When a core-type tire is employed, it is necessary to devise a method for mounting the core within the tire, and various methods have been proposed and tried. However, those methods are not widely used for the following reasons:
         There is no interchangeability with a usual non-run-flat tire.
         The number of parts is relatively large, accompanied by an increase in cost.
         Because of its wide structure, the weight of a tire and a rim becomes large.
         Mounting and dismounting of the tire and core onto the wheel is difficult. Type B (Side wall reinforcing-type):
      Since the type B (the side wall reinforcing type) tire is interchangeable with a standard non-run-flat tire and rim, the type B tire is more acceptable than the type A tire. Various methods for reinforcing the side wall have been proposed. However, those methods are not widely used for the following reasons:
         If an aspect ratio of a tire is high, a run-flat ability is not obtained. The aspect ratio should be equal to or less than 60%.
         Due to the reinforcing of the side wall, the spring characteristic of the vehicle in a vertical direction becomes rigid, so that riding comfort is degraded and noise increases.
         Due to the reinforcing of the side wall, absorption of shocks in a vertical direction is decreased, which affects the strength of the vehicle.
         The weight of the tire and wheel is increased significantly.
      Since a reinforced side wall has little flexibility, mounting and dismounting of the tire to the wheel is difficult.
         Type C (Combination of a wheel on which a tire can be laterally mounted and a run-flat core):

In order to solve the above-described problems, a third method was proposed by the present applicant in Japanese Patent Application No. 2001-352191. In the third method, "an integral run-flat core having a notch" is mounted to a wheel on which a tire can be laterally mounted. Since a structure according to the third method is not accompanied by a change in a tire structure, the structure is here called a run-flat core.

The structure includes a core having a plurality of notches on a circumference of the core and a rim having a divisional structure (wherein a flange at one end of the rim is divided from a remaining main portion of the rim and is dismountable from the main portion of the rim). The core is mounted to the rim laterally (in an axial direction of the rim).

According to this combination structure, the problems of the above-described type A and type B run-flat tires are solved because of the following reasons:
The run-flat core can be employed with standard non-run-fiat tires;

Owing to the notches, the core is flexible, so that insertion of the core into the tire becomes easy, allowing the tire to have a higher aspect ratio (higher than 50%); and

The weight of the tire and wheel is substantially the same as that of the conventional tire and wheel.

However, the above-described type C structure has the following problems:
(1) In the proposed structure, the core is heave.
(2) The size of the core is large and the cost for manufacturing and conveying the core is high. Further, insertion of the core into the tire is difficult.
(3) Pressing the core to a wheel rim is difficult, because the core is likely to float up from the rim due to centrifugal force

US 4,346,747 corresponding with the preamble of claim 1, describes a run-flat support having a plurality of annularly disposed circular support members. Each support member comprises a thin-wall casing body having lattice-like reinforcing ribs. The casing bodies are detachably connected to one another by connecting protrusions projecting from the casing bodies.

US 2001/0052379 describes a runflat device having a ring for mounting inside a tire on a onepiece non-standard wheel rim, the ring being made as at least two sectors, which are independent of one another.

### Summary of the Invention

An object of the present invention is to provide a run-flat core wherein the core is lighter, insertion of the core into a tire is easier, and pressing the core to a wheel rim is easier, than in the above-described type C structure.

A run-flat core according to the present invention is set out in claim 1.

According to the above-described run-flat core, since the block of the core has the shape of a hollow box closed at the upper surface and the reinforcing lattice plate or rib is provided in the box, the core is light, yet sufficiently strong to bear the load.

### Brief Description of the Drawings

FIG. 1 is a cross-sectional view of a run-flat core useful for understanding the invention.
FIG. 2 is a bottom view of a run-flat core useful for understanding the invention.
FIG. 3 is a side elevational view of a run-flat core useful for understanding the invention.
FIG. 4A is a bottom view of a first example of a lattice of a run-flat core useful for understanding the invention.
FIG. 4B is a bottom view of a second example of the lattice of a run-flat core useful for understanding the invention.
FIG. 4C is a bottom view of a third example of the lattice of a run-flat core useful for understanding the invention.
FIG. 4D is a bottom view of a fourth example of the lattice of a run-flat core useful for understanding the invention.
FIG. 5 is a side elevational view of a core including a plurality of blocks connected in a chain and is useful for understanding the invention.
FIG. 6 is a side elevational view of the core of FIG. 5 including the plurality of blocks connected in a chain, opposite ends of which are connected after the core is inserted into a tire.
FIG. 7 is a side elevational view of a portion of the core of FIG. 6 including blocks which are flexibly connected at an intermediate portion of the core in a height direction of the core.
FIG. 8 is a cross-sectional view of a connecting portion of the core blocks using a split pin and is useful for understanding the invention.
FIG. 9 is a cross-sectional view of a core binding structure using a belt and is useful for understanding the invention.
FIG. 10 is a side elevational view of the structure of FIG. 9.
FIG. 11 is a cross-sectional view of a core binding structure using a wire and is useful for understanding the invention.
FIG. 12 is a plan view of a core connecting structure using a hinge bar.
FIG. 13A is a side elevational view of a loop structure for adjusting a tension for binding, in a state where the structure is loosened.
FIG. 13B is a side elevational view of the loop structure for adjusting a tension for binding, in a state where the structure is tightened.
FIG. 14 is a front elevational view of a structure for simultaneously operating the tension adjusting structures located at right and left sides of a core and is useful for understanding the invention.
FIG. 15 is a plan view of a rod rotation stopping mechanism for the loop structure for adjusting a tension for binding.
FIG. 16A is a side elevational view of a reverse-rotation preventing link structure for adjusting a tension for binding, in a state where the structure is loosened.
FIG. 16B is a side elevational view of the reverse-rotation preventing link structure for adjusting a tension for binding in a state where the structure is fastened.
FIG. 17 is a side elevational view of a turnbuckle structure for adjusting a tension for binding.
FIG. 18A is a plan view of a hinge bar spring structure for adjusting a tension for binding, in a state where the structure is loosened and is useful for understanding the invention.
FIG. 18B is a plan view of the hinge bar spring structure for adjusting a tension for binding, in a state where the structure is fastened and is useful for understanding the invention.
FIG. 19 is a plan view of a hook structure for adjusting a tension for binding and is useful for understanding the invention.
FIG. 20 is a cross-sectional view of a core provided with a fin inserted in a tire and is useful for understanding the invention.
FIG. 21 is a perspective view of an annularly connected core according to the present invention, illustrating how the core is inserted into a tire.
FIG. 22 is a side elevational view of a hook connecting portion using a hook made from synthetic resin, of the run-flat core and is useful for understanding the invention.
FIG. 23 is a side elevational view of a hook connecting portion using a hook made from metal, of the run-flat core and is useful for understanding the invention.
FIG. 24A is a side elevational view of a buckle connecting portion of the run-flat core according to the present invention, in a state where the connecting portion begins to be fastened.
FIG. 24B is a side elevational view of the buckle connecting portion of the run-flat core according to the present invention, in a state where the connecting portion has been fastened.
FIG. 25A is a side elevational view of a core constructed of a single block, in a state where the core is wound for insertion into a tire and is useful for understanding the present invention.
FIG. 25B is a side elevational view of the core constructed of a single block in a state where the core has been inserted into the tire and is useful for understanding the present invention.
FIG. 26A is a side elevational view of a core divided into two portions, before the core is inserted into a tire and is useful for understanding the present invention.
FIG. 26B is a side elevational view of the core divided into two pieces according in a state where one of the two pieces of the core is being inserted into the tire and is useful for understanding the present invention.
FIG. 26C is a side elevational view of the core divided into two pieces to the present in a state where the other of the two pieces of the core is being inserted into the tire and is useful for understanding the present invention.
FIG. 26D is a side elevational view of the core divided into two pieces in a state where both of the two pieces of the core have been inserted into the tire and is useful for understanding the present invention. inserted into the tire and is useful for understanding the present invention.
FIG. 27 is a cross-sectional view of a core having a longitudinal groove according to the present invention.
FIG. 28 is a cross-sectional view of the core of FIG. 27 in a direction perpendicular to that of FIG. 27.
FIG. 29 is a cross-sectional view of the run-flat core of FIG. 27, in a state where the tire is punctured.
FIG. 30 is a cross-sectional view of the run-flat core of FIG. 27.
FIG. 31 is a cross-sectional view of a connecting portion between blocks of the run-flat core of FIG. 27.
FIG. 32 is a cross-sectional view of a lubricant housing portion of the run-flat core according to the present invention.
FIG. 33 is a cross-sectional view of another lubricant housing portion of the run-flat core according to the present invention.
FIG. 34 is a cross-sectional view of the run-flat core of FIG. 1, in a state where the tire is punctured.
FIG. 35 is a cross-sectional view of the run-flat core of FIG. 1 and the tire and the rim, in the state where the tire is punctured.
FIG. 36 is a cross-sectional view of the run-flat core of FIG. 1 illustrating a distance between ceiling plates of adjacent blocks.
FIG. 37 is a cross-sectional view of the run-flat core of FIG. 1 illustrating contact of the core and the tire in the state where the tire is punctured.

### Detailed Description of Several Embodiments

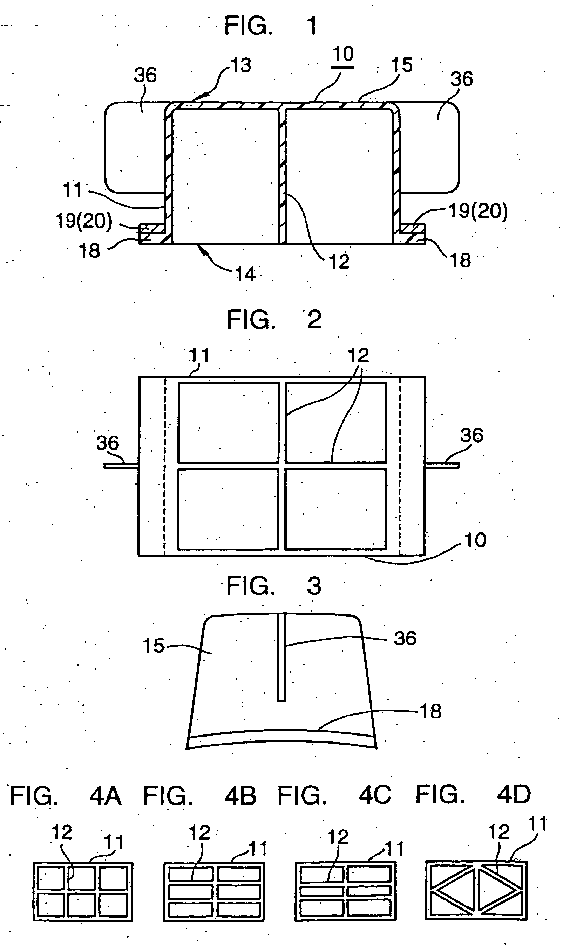

Various embodiments of run-flat cores will be explained with reference to FIGs. 1 - 37. First structures for solving the above-described problems (1), (2) and (3) will be explained in items (1), (2) and (3) below, respectively, and second structures as an extension of the first structures will be explained in item (4) below. Further, third structures which are improvements of the second structures will be explained in item (5) below.

### (1) Lightening of the core

In order to lighten the core, low density material is used for the core and material is removed from unnecessary portions. A core of the above-described C structure has a volume of about 0.8L (L: liter) per one protruded portion (a portion between adjacent notches). When the density of the material of the protruded portion is about 1 g/cc, the weight of the protrusion is about 0.8 kg, and the weight of all of the protrusions is about 10 kg. The core is too heavy. To solve the problem, the material of the core can be changed to synthetic resin or a reinforced synthetic resin (for example, a glass-fiber mixed synthetic resin, having a density of about 1.5 - about 1.7 g/cc), and the block portion (corresponding to the protruded portion) can be constructed as a hollow structure to thereby lighten the core.

In a run-flat system, the vehicle should be able to run over a distance of 200km after the tire is punctured. When the tire is punctured, the core must bear the weight of the vehicle. The vehicle runs about 2m per round of the tire. When the vehicle runs 200km, the core receives the weight (W) of the vehicle repeatedly, about 1,000,000 times. Further, the core should withstand front-and-rear loads and right-and-left loads (estimated as 70% of the weight of the vehicle, i.e., 0.7W) due to braking and turning, about 1% of the times of the vertical loads (i.e., 10,000 times). A new structure of the core for satisfying the strength required has been invented, using an EFM (finite element method) stress analysis.

As illustrated in FIGs. 1 - 4D, the core 10 includes a plurality of blocks (or core blocks) 15 made from synthetic resin or reinforced synthetic resin or the like and manufactured through injection forming or the like. Each block 15 has a structure which is able to bear the vertical loads, the front-and-rear loads and the right-and-left loads and is able to be easily manufactured through injection forming. More particularly, the block 15 has a shape of a box 11 having a closed upper surface 13, a closed side surface and an open lower surface 14. The block 15 has a (for example, lattice-shaped) reinforcing plate (or rib) 12 inside the box 11. The vertical direction corresponds to a radial direction of the wheel when the core is mounted to the wheel, and the up direction corresponds to a radially outward direction of the wheel and the down direction corresponds to a radially inward direction of the wheel. A longitudinal groove may be formed in the upper surface 13.

The upper surface 13 is closed to bear the front-and-rear force and the right-and-left force. The reinforcing plate 12 is provided for reinforcing an entire portion of the block. The lattice can have any of a variety of shapes. Examples are illustrated in FIGs. 4A - 4D.

When the wall of the box 11 and the reinforcing plate 12 is formed so as to have thickness of about 2 - about 4 mm and is made from material of about 1.6 g/cc in density, a weight of one block can be about 0.3 kg (corresponding to a case of a 17 inch wheel). This satisfies an aimed weight.

### (2) Decrease in the volume of the core block and connecting structure

If the entire core is integrally formed, the core will be large, accompanied by an increase in the weight of the core, and made by a large and costly metallic forming molding machine. Further, the efficiency associated with transporting the core is low because of the large volume.

The aforementioned structure C proposed by the present applicant is not a uniform, flat structure in a longitudinal direction thereof for improving "an insertion property" and "prevention of a columnar resonance", but a single annular band structure having six to fifteen protrusions in the band.

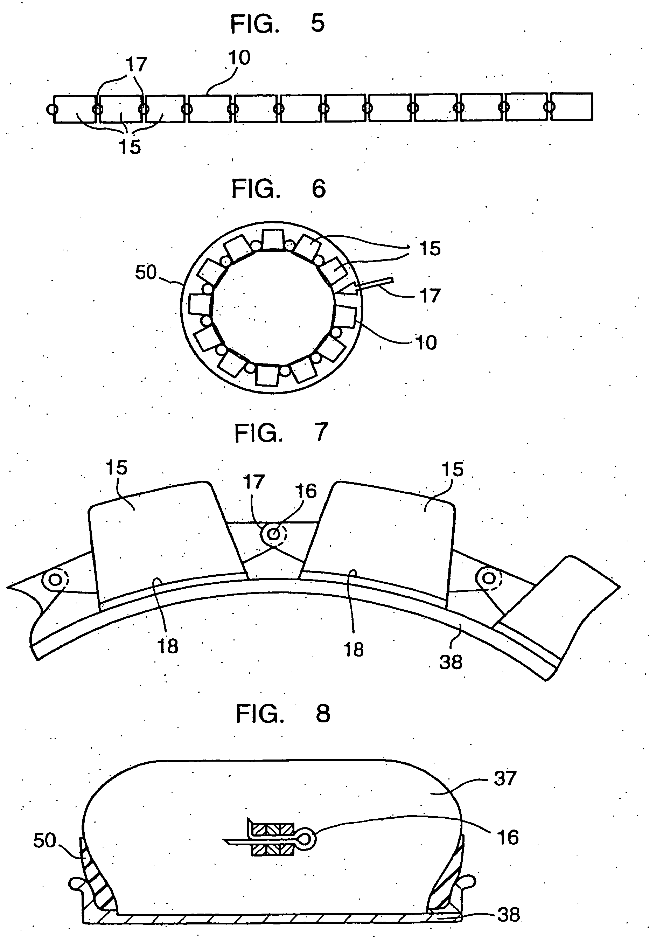

In the above-described C structure it is not easy to insert the core into a tire. In order to make insertion of the core into the tire easy, core 10 is formed as blocks 15 independent of each other, and the separate blocks are connected to each other at connecting portions 17 thereby forming a core 10 formed in a chain of blocks (FIGs. 5-7). Each block is of a comparatively small size, so that the manufacturing cost and a transport cost are decreased. Further, it becomes easier to insert the core into the tire 50.

Connection of the blocks 15 should be performed before the tire 50 is mounted to the rim 38, because connection after mounting the tire to the rim is difficult because of little space. Accordingly, mounting of the core 10 to the rim 38 is performed in the following steps:
① A predetermined number of core blocks 15 (twelve in the example of FIGS. 5 and 6) are connected. Opposite ends of the chain of blocks are not connected to each other and are open.
② The core 10 is inserted into the tire 50. After the insertion, the non-connected opposite ends of the chain of blocks are connected to each other.
③ A pressing member for pressing the blocks 15 to the rim 38 is coupled to the blocks 15.
④ The core 10 and the tire 50 together are mounted to the rim 38.
⑤ The core 10 is fastened to the rim 38 by the pressing member.

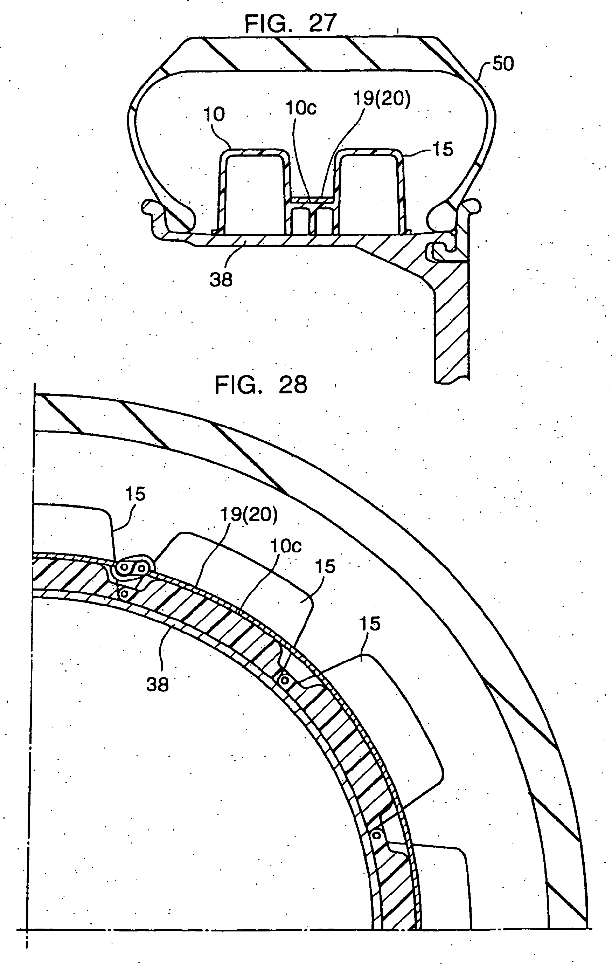

Since the opposite ends of the chain of blocks are not connected to each other, the core can be easily inserted into the tire, even when an outside diameter of the core is greater than an inside diameter of the tire. Further, one of the axially opposite end flanges of the rim 38 (for example, a right flange in FIG. 27) is constructed so as to be dismountable from a remaining, main portion of the rim. With the flange dismounted, the tire and the core 10 inserted inside the tire are mounted to the rim 38 in a lateral direction (in an axial direction of the wheel).

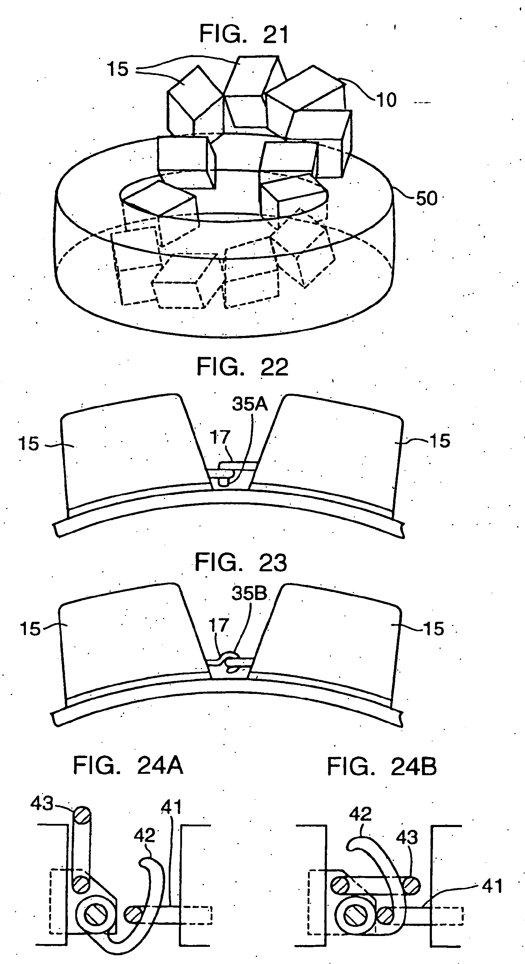

In order to make the connection of the core blocks 15 easy, the core blocks are connected by means of a split pin connector, as illustrated in FIGs. 7 and 8, or a hook connector, as illustrated in FIGs. 22 and 23. Since a large force does not act on the connecting portion 17 after the core blocks 15 are fastened to the rim 38, a sufficient connecting strength is obtained by the split pin 16 only. In the case of the split pin, an outside diameter of the split pin is selected to be sufficiently smaller than an inside diameter of a hole formed in the connection bracket, so that a smooth pivotal motion is obtained at the connecting portion 17, whereby insertion of the core 10 inside the tire 50 is easy.

Further, the connecting portion 17 can be located at about a mid-height of the core, so that a good pivot motion of the core is obtained at the connecting portion.

With the above-described connecting structure of the core blocks and insertion method of the core into the tire, mounting of the core into a tire even with a large aspect ratio (e.g., 50% - 80%) is possible, accompanied by a decrease in the weight of the run-flat core, an improvement of a drive feeling, and a decrease in noise.

Dismounting the core 10 from the rim 38 when the tire is changed is performed in the following steps which are the reverse of the above-described mounting steps:
① The pressing member is loosened.
② The core is dismounted from the rim, together with the tire.
③ One of the connecting portions of the core is disconnected.
④ The core is taken out from the tire.

### (3) Structures for pressing the core blocks to the wheel rim

An inside diameter of the core 10 can be greater than an outer diameter of a rim portion when the core is mounted so that mounting of the core to the rim 38 is easy. Therefore, as the core is mounted onto the rim, the core 10 may not contact the rim fully. If the vehicle moves in this state, the core may move inside the tire and will generate noise.

A centrifugal force acts on the core 10. The core can be fastened to the rim so that the core does not float up from the rim even if centrifugal force acts the core.

### [A binding structure]

### ① Pressing by a tension of a belt or wire

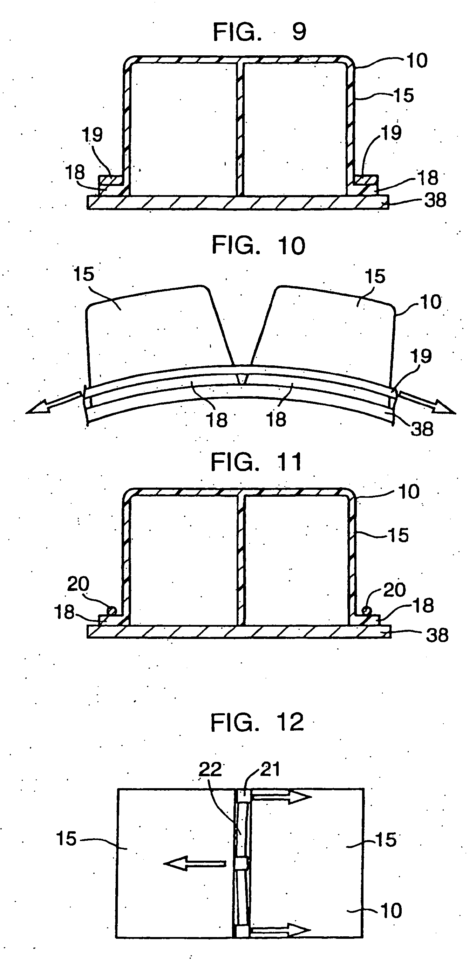

A flange (which may be called a shelf) 18 is formed integral with a block portion where the block contacts the rim 38, for pressing the core to the rim. A band such as, for example, a belt 19 (FIG. 9 or FIG. 10) or wire 20 (FIG.11) extending in a circumferential direction of the wheel is wound on the flange 18 and tensioned. By adjusting the tension of the belt or wire, the blocks are pressed to the rim at a required pressing force. The belt 19 or wire 20 may be made from any material so long as the belt or wire can endure the tension.

### ② Pressing by a spring force of a hinge bar

As illustrated in FIG. 12, the core blocks 15 are connected to each other by a hinge structure 21 at a lower portion of the block in a height direction of the block, wherein the blocks are pressed to the rim by a tension which is generated in the core due to a bending reaction force of a hinge bar 22. The hinge structure 21 includes protrusions formed in adjacent blocks 15 and protruding toward the opposing blocks 15. Holes are formed in the protrusions, and the hinge bar 22 extends through the holes so that the adjacent blocks 15 are pivotal about the hinge bar 22.

The chain of blocks which is not yet connected at opposite ends thereof is inserted into the tire and is mounted onto the rim together with the tire. Then, the opposite ends are pulled so as to be close to each other and are connected to each other. When the pulling force is removed from opposite ends, a bending force acts on all of the hinge structures 21 whereby a tension which is a reaction force of the bending force of the hinge bars 22 is generated in the core in the circumferential direction of the wheel.

### [A structure for adjusting the tension for binding]

### ① Tensioning the belt or wire

### A. a loop formed in the connecting portion

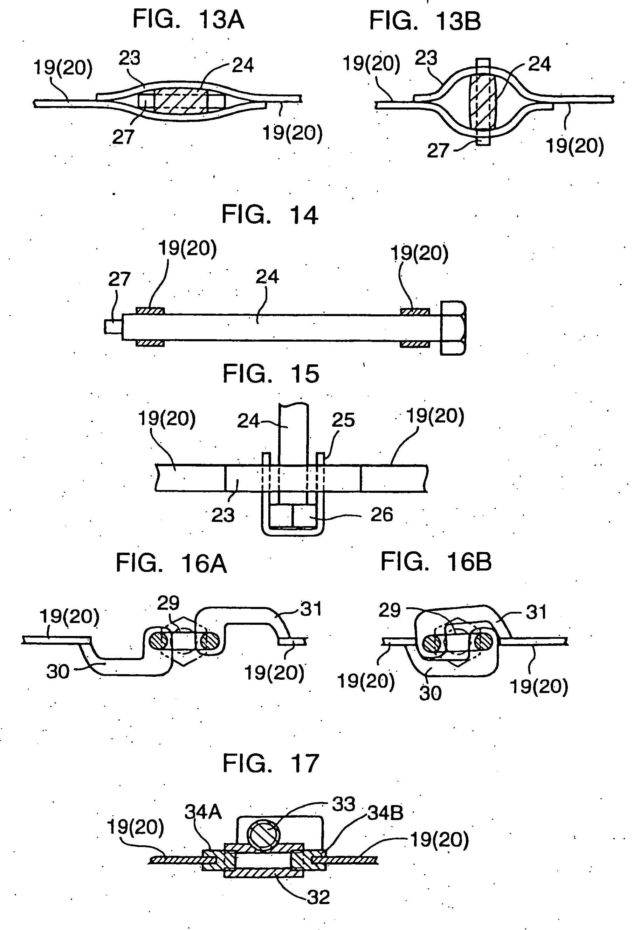

Loops (loop-formed portions) 23 illustrated in FIG. 13A and FIG. 13B are formed at the connecting portion 17 of the belt 19 or wire 20, and a rod 24 having a rectangular cross-section is inserted through the loops 23. Then, the rod 24 is rotated by 90 degrees, so that a state of FIG. 13A where the loop is not enlarged in a vertical direction is changed to a state of FIG. 13B where the loop is enlarged in the vertical direction, whereby a length of the loop in the circumferential direction of the wheel is changed and the tension of the belt 19 or wire 20 is adjusted.

As illustrated in FIG. 14, since the rod 24 extends in an axial direction of the wheel over the belts 19 or wires 20 located at a right side and a left side of the core 10, tensions of the right and left belts 19 or wires 20 can be adjusted from a position axially outboard of the wheel through a clearance between the tire and the rim.

When the belt or wire is tensioned, the rod 24 is prevented from rotating by the tension of the belt or wire itself. When such a rotation preventing structure 25 as illustrated in FIG. 15 is added, rotation of the rod 24 is more surely prevented. In the structure of FIG. 15, a hexagonal bolt head 26 is formed in one end of the rod 24, and the bolt head 26 is engaged by a U-shaped member having legs. The legs of the U-shaped member are inserted into the loop 23 so that the U-shaped member and the bolt head of the rod 24 are not rotated.

Since a bolt head 26 is provided at one end of the rod, it is possible to rotate the rod by a torque wrench, etc., thereby tightening the belt or wire. By providing protrusions 27 at an opposite end of the rod from bolt head 26, as illustrated in FIGs. 13A, 13B and 14, the rod 24 is prevented from disengaging from the loop 23 when the belt 19 or wire 20 is tensioned. The protrusions 27 extend in a direction in which a long side of the rectangular cross section of the rod 24 extends, and a distance between tip ends of the opposite protrusions 27 is greater than a length of the long side of the rectangular cross section of the rod 24.

### B. a linkage having a reverse rotation preventing structure

A linkage 28 including an intermediate link 29 as illustrated in FIGs. 16A and 16B is provided at the belt connecting portion 17. By rotating the intermediate link 29, the belt or wire is tensioned. More particularly, the linkage 28 includes right and left links 30 and 31 connected by the intermediate link 29. By rotating the intermediate link 29 by 180 degrees, a length of the linkage 28 is changed from a loosened state of FIG. 16A to a fastened state of FIG. 16B.

The intermediate links 29 of the right and left connecting portions 17 of the right and left belts 19 or wires 20 may be connected via the rod (rod 24 of FIG. 14) in the same way as in the loop arrangement. By directing the bolt head of the rod outboard in the axial direction of the wheel, it is possible to rotate the rod from a position axially outboard of the wheel thereby tensioning the belt or wire.

In this structure 28, as illustrated in FIG. 16B, when the intermediate link 29 is rotated to a rotational position beyond a neutral position (where the intermediate link 29 is parallel to the belt and wire), a reverse rotation preventing moment, due to the tension of the belt or wire, acts on the intermediate link 29, so that the linkage 28 is not loosened. This is called as a reverse rotation preventing mechanism of the linkage.

When the core is dismounted, the belt or wire connected to the link 30 and the belt or wire connected to the link 31 are pulled so as to be closer to each other, and then the intermediate link 29 is rotated in the reverse direction opposite to the rotational direction at the time of fastening, from the state of FIG. 16B to the state of FIG, 16A, so that the belt or wire is loosened and is dismounted from the rim.

### C. a turnbuckle structure

As illustrated in FIG. 17, at a connecting portion 17 of the belt 19 or wire 20, a left-hand thread member 34A is coupled to a belt 19 or wire 20 located on one side of the connecting portion 17, and a right-hand thread member 34B is coupled to a belt 19 or wire 20 located on the other side of the connecting portion 17. The left-hand thread member 34A and the right-hand thread member 34B are connected via a turnbuckle 32 having a left-hand thread and right-hand thread formed in opposite ends thereof. A worm gear 33 extending in the axial direction of the wheel thread-engages with the gear formed in the outside surface of the turnbuckle 32. By rotating the turnbuckle 32 by the worm gear 33, the belt 19 or wire 20 is tensioned.

Like the rod 24 in FIG. 14, the worm gear 33 connects the turnbuckles 32 located at the right and left sides of the core in the axial direction of the wheel, and by rotating the worm gear 33 from a position axially outboard of the wheel, the belt 19 or wire 20 is tensioned so that a necessary tension of the belt or wire is obtained.

There is little fear that the worm gear 33 rotates in a reverse direction, and the wire is loosened, due to a self-locking property of the turnbuckle assembly. If a double nut is additionally used, loosening of the belt or wire will be more surely prevented.

### ② Tensioning a connection using a hinge bar

### A. A U-shaped hinge

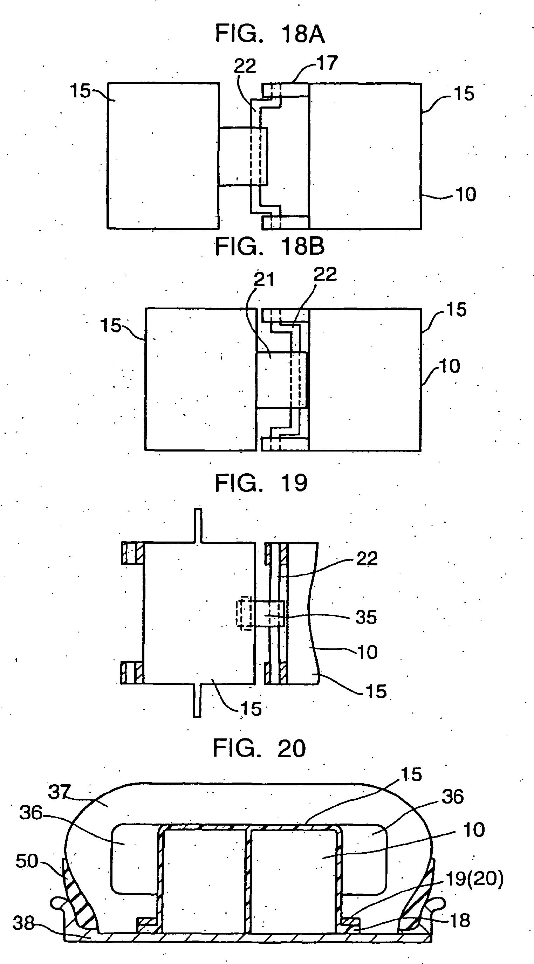

As illustrated in FIGs. 18A and 18B, the hinge structure at the connecting portion 17 of the chain of blocks includes a U-shaped hinge bar 22. By rotating the hinge bar 22 by 180 degrees or more, the state illustrated in FIG. 18A, where the chain of blocks is loosened, is changed to the state illustrated in FIG. 18B, where the chain of blocks is tensioned, so that a necessary tension of the chain of blocks is obtained.

When the hinge bar 22 is rotated by a rotational angle more than 180 degrees, the tension of the chain of blocks acts to give a loosening-preventing moment to the connecting portion.

### B. A hook

As illustrated in FIG. 19, the connecting portion of the chain of blocks may include a connection using a hook 35. By pulling an opposing core block toward the instant block, a tension is generated in the chain of blocks. In the tension state, the hook 35 is engaged with a hinge bar 22 of the opposing block, whereby the instant block and the opposing block are connected to each other.

When disengaging the hook 35, an extra tension is imposed on the chain of blocks so that the hook portion is loosened, and in the loosened state, the hook 35 is disengaged from the hinge bar.

In any approach under item (1) above (using a belt or wire) or item (2) above (using a hinge), it is preferable to provide a balance weight at a position 180 degrees opposite to the tension adjusting mechanism about a wheel center. Though the tension adjusting mechanism generates an imbalance, the balance weight compensates for the imbalance, so that the wheel mounted with the run-flat core is rotationally balanced.

### [Other conditions for the core]

In the afore-described structure of the combination of the wheel enabling a tire to be laterally mounted and the core, the core block acts as a partition for the columnar space inside the tire thereby changing the columnar resonance frequency of the assembly and preventing noise caused by columnar resonance.

In order for the core block to effectively perform the role as a partition, the block can have a cross-sectional area larger than seventy percent of the cross-sectional area of the space inside the tire.

However, it is difficult to design the core block 15 so that its cross-sectional area is greater than seventy percent of the cross-sectional area of the space inside the tire, especially while attempting to lighten the core while keeping the necessary strength, enable easy insertion of the core into the tire, and provide a structure for pressing the core to the wheel.

As illustrated in FIGs. 1, 2 and 20, fins 36 can be provided protruding outwardly in right and left directions at outside surfaces of the right and left side walls of the core block 15. Each fin 36 is designed such that it partitions the columnar space 37 inside the tire 50 and does little to increase the weight of the block, while not hindering insertion of the core and pressing the core to the wheel.

### (4) Easing insertion of the core block into the tire

In order to ease insertion of the core into the tire 50, the core 10 can take any of the following structures:

### (4-1) An annular chain core

As illustrated in FIG. 21, the core 10 is divided into a plurality of, for example, six to fifteen blocks 15 made from synthetic resin. The blocks are connected in an annular connected chain before the core is inserted into the tire 50. As illustrated in FIG. 21, the annularly connected core 10 is pivotally bent and inserted into the tire 50 like a snake toy.

Each block connecting portion 17 may be a connection by a pin 16 (see FIGs. 7 and 8). When a relatively large clearance is provided between the pin 16 and the pin hole so that a flexible structure (a structure able move through a large pivotal motion) is obtained, insertion of the core into the tire 50 is easy. A core 10 having a required height can be inserted into a tire having an aspect ration equal to or less than about 50%. The core 10 is pressed to the wheel rim such that a relatively large tension does not act on the connecting portion 17, so that the connecting structure can be simple and light. The tension is generated by a system different from the connecting structure, such as the belt 19 or wire 20.

The connecting structure between the blocks can use the pin 16 or the hook 35 to ease manufacturing, enable connection through a small gap between the tire and the core after insertion of the core into the tire, and maintain flexibility at the connecting portion 17.

The hook can be a synthetic resin hook 35A (FIG. 22) or a metallic hook 35B (FIG. 23). Where the block 15 is made from synthetic resin, the synthetic resin hook 35A is formed integrally with the block, whereby an additional member is unnecessary and a cost advantage is obtained. The metallic hook 35B can be threaded through a latch in the core block 15.

### (4-2) A linear chain core with ends connected after insertion

Before inserted into the tire 50, opposite ends of the chain of blocks 15 are not connected, so that the core is not annular but in the form of a linear chain. Due to this structure, the flexibility of the chain of blocks is further increased, so that insertion of the core into the tire 50 is very easy (FIG. 5). With this approach, the core 10 having a required thickness can be inserted into a tire 50 of any aspect ratio.

Since opposite ends of the chain are connected after the core is inserted into the tire 50 (FIG. 6), the connecting structure of the opposite ends should be easily operable. The pin connecting structure and the hook connecting structure described in item (4-1) above are examples of connecting structures where connection is easy in a small space and can be used for connection of the opposite ends of the linear chain core described in item (4-2).

### (4-3) Single block core

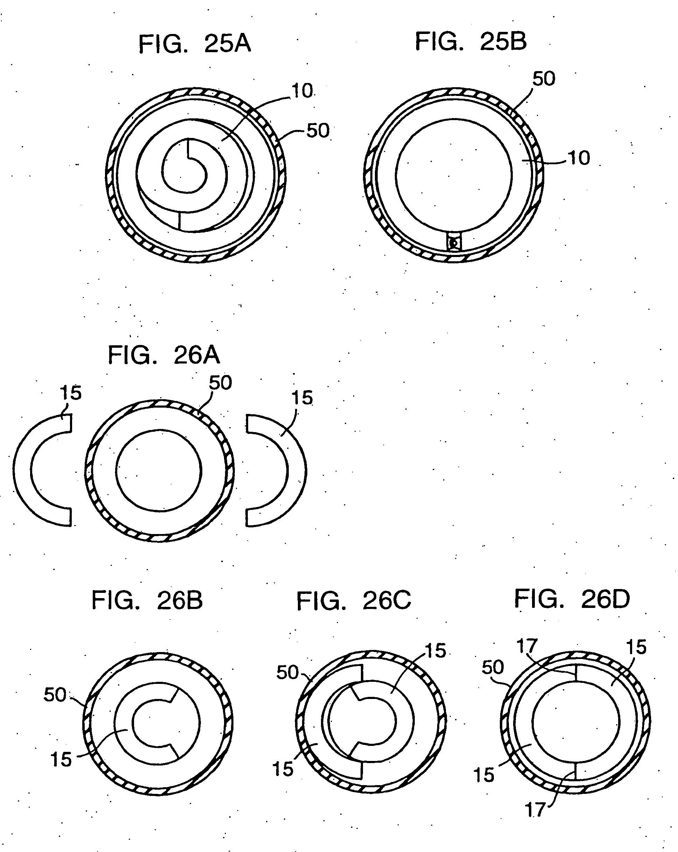

The chain of blocks where a plurality of blocks 15 are connected into the form of a chain may be replaced by a core made in the form of a single block, as illustrated in FIGs. 25A and 25B. The single block core 10 is made straight or annular, and opposite ends of the core 10 are connected.

As illustrated in FIGs. 25A and 25B, by curling the core 10, the core 10 can be inserted into the tire 50 having an aspect ratio up to about 50%. After the core 10 is inserted into the tire 50, the opposite ends of the core are connected (FIG. 25B).

The connecting structure can not only connect the ends of the core 10, but also press the core to the rim. For example, the aforementioned intermediate link 29 (FIGs. 16A and 16B) or the buckle arrangement (FIGs. 24A and 24B) described below can be used.

In the buckle connecting structure, as illustrated in FIGs. 24A and 24B, a U-shaped bar 41 fixed to an opposing block 15 is hooked by a rotatable hook 42 so that the core 10 is connected. Then, the hook 42 is rotated so that the opposing block 15 is pulled to an instant block and the pressing force is adjusted. Finally, reverse rotation of the hook 42 is restricted by a locking bar 43. A connecting procedure is illustrated in FIGs. 24A and 24B.

### (4-4) A multi-piece core (A divisional core, a synthetic resin divisional core having five or less cutting portions)

FIGs. 26A - 26D show a core divided into two portions and the process for inserting the core into tire 50. Any number of core portions can be used up to about five portions. Since the core is divided, the insertion of the core into the tire is easy. The core 10 can be inserted into a tire 50 of any size.

With the single block core of item (4-3) above, since the connector defines an imbalance weight, a counterweight can be provided. In contrast, in the case of the multi-piece core of item (4-4), when the connecting portions are positioned at diametrically opposite positions, no counterweight is needed. In the case of a multi-piece core having three to five portions, the blocks can have a uniform length.

### (5) Further optional features for chain block cores

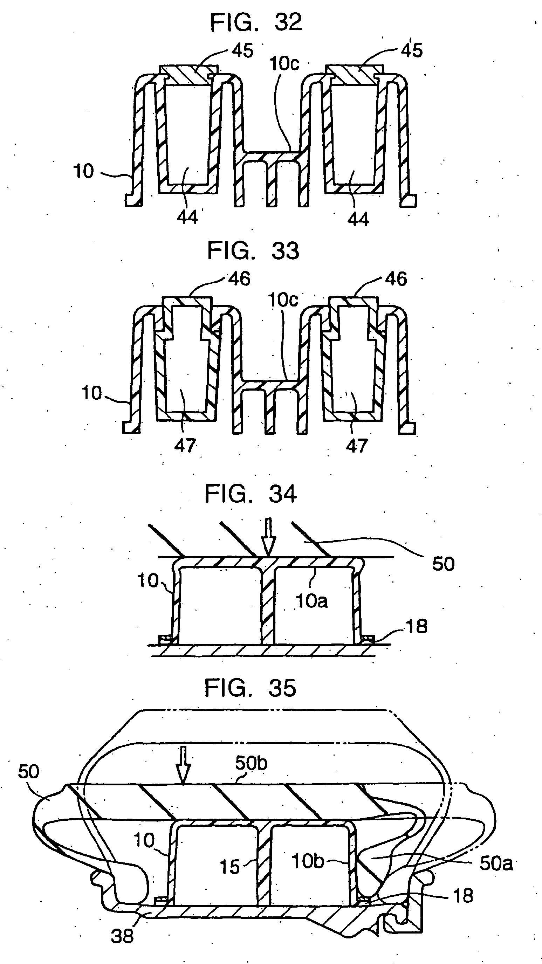

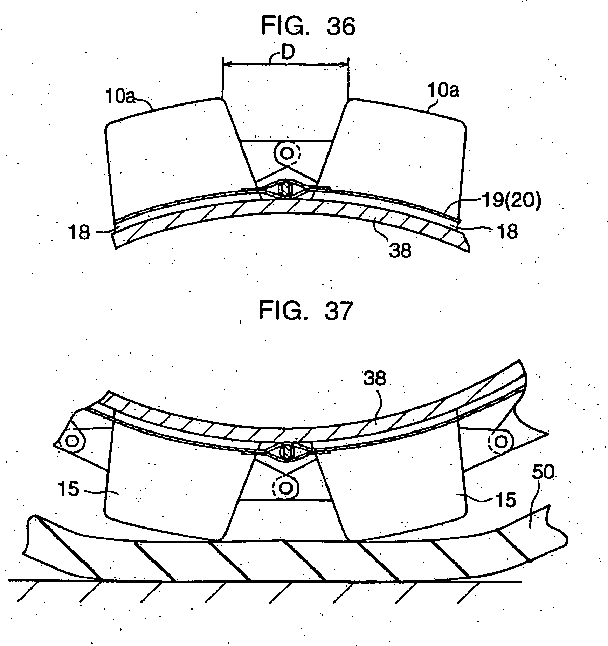

The following issues ① - ⑧ with chain block cores can be optionally addressed with embodiments illustrated below:
① Since the core block 15 is pressed to the rim 38 by two belts 19 or wires 20, portions of tensioning the belts 19 or wires 20 are located at right and left sides of the block, whereby connection and tension therefor require more time than necessary. In order to make the tensioning simple, the rod 24 can be provided.
② When the belt 19 or wire 20 for pressing is wound onto the core block 15, the belt 19 or wire 20 can be temporarily fixed to the block by a tape, etc., so as not to be dislocated from the flange 18 before the belt 19 or wire 20 is tensioned.
③ As illustrated in FIG. 34, when a load is imposed on a ceiling plate 10a from the tire 50 when the tire runs while it is punctured, a large stress concentration occurs at right and left corners of the ceiling plate 10a because the flanges 18 of the core 10 are pressed to the rim and cannot move relative to the rim. As a result, the core can be broken.
④ When the tire is punctured, the bead portion 50a of the tire 50 is movable between a rim flange 38 and the right and left side wall 10b of block 15. Since the block 15 is provided with the flange 18, as illustrated in FIG. 35, the side wall 10b of the block 15 is located inboard by a width of the flange 18. As a result, a range where the bead 50a is movable is widened, and an amount by which a tire tread 50b moves laterally at the time of turning of a vehicle is increased, so that escape of a lateral force occurs.
⑤ As illustrated in FIG. 36, when the flange 18 is located at a lower position, the blocks can be sufficiently distanced from each other to assure a space for providing the pressing mechanism between the blocks, so that a distance D between the ceiling plates 10a of the adjacent blocks is large, for example, about 50 - about 70 mm. As a result, vibration and noise when the tire is run while punctured can be large, and it is difficult to continue the running of the vehicle.
⑥ As illustrated in FIG. 37, as a result of the large distance between the ceiling plates 10a of the adjacent blocks 15, a force for stopping rotation of the core 10 is large. The potential energy of the core is lowest at a mid-position between ceiling plates 10a of adjacent blocks because the core is dynamically stable at that position. In order for the core to rotate, the core has to raise the rim and the vehicle, and when the distance between the blocks is large, a force for stopping rotation of the core is large. As a result, it is difficult for the core to rotate with the tire 50 and the rim 30. If the core 10 easily slips relative to the rim 38, the core 10 is less likely to rotate and slippage between the core and the tire 50 increases whereby the core 10 can break.
⑦ Since there is a speed difference between a back surface of the tire and the ceiling plate of the core, the core and the tire slide relative to each other. In order to decrease a frictional force due in the sliding, thereby suppressing abrasion and heat generation due to the friction, a lubricant can be supplied to the back surface of the tire and the ceiling plate. If the lubricant is directly coated to an inside surface of the tire, the following problems may happen:
   a) If the lubricant is exposed to air, the lubricant can be degraded due to oxidation and absorption of moisture.
   b) The lubricant can chemically react with the rubber of the tire and can be absorbed by the rubber.
   c) The lubricant can chemically react with the rubber of the tire, and the tire can be degraded
⑧ When the tire runs while punctured, the distance between the ceiling plate of the core and the back surface of the tire should be small to maintain steerability and decrease vehicle deflection. However, if the distance is too small, the back surface of tire can contact the core even when the tire is not punctured, and the core may be damaged when the tire passes over a bump in the road surface.

The following embodiments address issues ① to ⑧:

### (A) A longitudinal groove structure

As illustrated in FIGs. 27 and 28, the core 10 is divided into a plurality of blocks 15. The plurality of blocks 15 are connected in the circumferential direction of the wheel. The core 10 is inserted into the tire 50, with a vertical direction of the core 10 extending in a radial direction of the wheel and with an width direction of the core 10 extending in an axial direction of the wheel. A longitudinal groove 10c is formed in the core 10 (for example, at or close to a mid-width portion of the core 1). The longitudinal groove 10c extends in a circumferential direction of the wheel, and is open upwardly and is closed downwardly at a groove bottom wall. The core 10 is pressed to the wheel rim 38 by fitting the belt 19 or wire 20 in the groove 10c and tensioning the belt or wire.

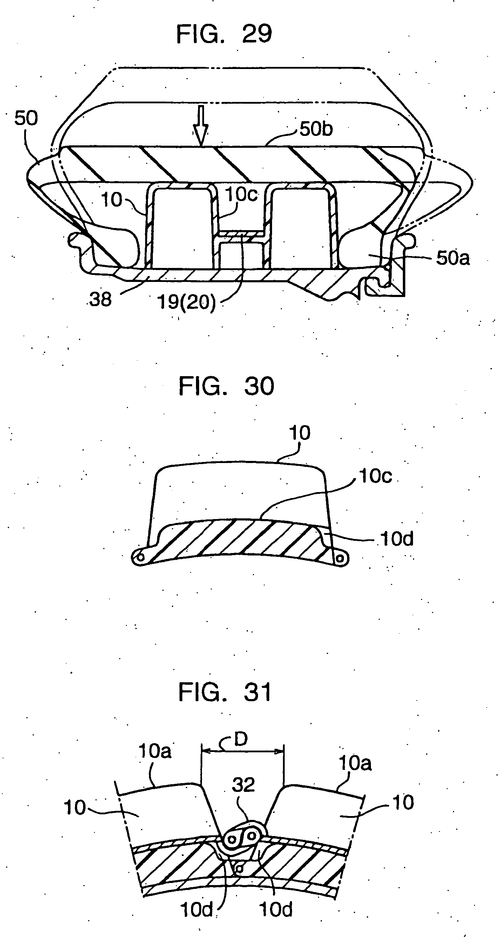

Due to this structure, the aforementioned issues ① to ④ are addressed as follows:
Issue ①: As illustrated in FIG. 27, since the place for tensioning the belt or wire is at the mid-width of the core 10, issue ① is solved.
Issue ②: As illustrated in FIG. 27, since the belt 19 or wire 20 is fitted in the deep groove 10c, the belt 19 or wire 20 cannot escape from the groove 10c. Accordingly, the belt 19 or wire 20 need not be temporarily fixed by a tape, etc.
Issue ③: When a weight of vehicle is loaded on the core 10 when the tire is punctured, lower ends of the right and left side walls 10b of the core 10 slip in the right and left directions relative to the rim 38 because the lower ends of are not bound to the rim, and an entire portion of the core 10 is deformed and supports the load so that stress is unlikely to concentrate at a shoulder of the core.
Issue ④: As illustrated in FIG. 29, since the core 10 is pressed at a mid-width of the core, the walls 10b of the core 10 can be positioned outwardly in the right and left direction by the amount of the right and left flanges 18, so that a range of movement in the right and left direction of the tire bead 50a when the tire runs while punctured is restricted. As a result, since deformation and movement of the tread 50b becomes small, the vehicle can run more stably.

### (B) A raised groove bottom surface structure

As illustrated in FIG. 30, a bottom surface of the longitudinal groove 10c which is a core pressing portion is raised in the vertical direction of the core, and shoulder portions 10d of the bottom surface of the longitudinal groove 10c, located at opposite ends of the bottom surface in the wheel circumferential direction, are removed thereby providing a space for block connecting mechanism 32. Due to this structure, a distance between the blocks 15 is reduced, and the distance D between the ceiling plates 10a of the adjacent blocks also is reduced (FIG. 31).

Due to this structure, the aforementioned issues ⑤ and ⑥ are addressed as follows:
Issue ⑤: As illustrated in FIG. 31, since the distance D between the ceiling plates 10a is reduced, vibration and noise generated when the tire is run while punctured are reduced. The distance between the ceiling plates of the core pieces connected can be in a range of about 10 - about 40 mm as shown in Table 1. If the distance between ceiling plates is equal to or smaller than about 40 mm, road noise can be less than about 80 dB and comfortable running is possible, and if the distance is less than about 10 mm, mounting the core can be difficult. The distance between ceiling plates in the range of about 10 - about 40 mm can also be applicable to block chain cores having no longitudinal groove 10c.
Issue ⑥: As illustrated in FIG. 31, since the distance D between the ceiling plates 10a is reduced, a difference of a vertical position of the wheel between high and low positions thereof due to the distance D between the ceiling plates 10a is small. Therefore, since a change in the potential energy when the tire is punctured is small, a force which acts to stop rotation of the core 10 is decreased. As a result, the core 10 is unlikely to stop its rotation at an intermediate position between the ceiling plates 10a, so that a possibility of breakage of the core 10 is decreased.

**Table 1**

| Road noise (dB) measured | | | | |
|---|---|---|---|---|
| | | Distance between ceiling plates (mm) | | |
| | | 10 | 40 | 70 |
| Running speed (Km/h) | 40 | 59.5 | 65.9 | 72.8 |
| | 80 | 66.4 | 77.3 | 85.8 |

### (C) A lubricant housing structure

A mechanism A or B for housing a lubricant and scattering the lubricant inside the tire 50 when the tire is punctured is provided. The mechanism A or B is applicable to a chain block core having no longitudinal groove 10c, also.
Mechanism A: As illustrated in FIG. 32, a lubricant housing portion 44 is formed in the core 10 and is closed by a cap 45. When the tire is punctured, the cap 45 slides with the tire and comes off, so that the housed lubricant 47 is scattered inside the tire.
Mechanism B: As illustrated in FIG. 33, a hole is formed in the ceiling plate 10a of the core, and a capsule 46 housing a lubricant is inserted into the hole. When the tire is punctured, the capsule 46 slides with the tire and is broken, so that the housed lubricant 47 is scattered inside the tire.

Due to this structure, the aforementioned issue ⑦ is addressed as follows:
Issue ⑦: Due to the housing portion 44 formed in the core 1 or the capsule 46, when the tire is not punctured, the lubricant 47 is not scattered inside the tire. When the tire is punctured, using the force generated when the tire and the core slide with each other, the cap of the housing portion 44 comes off or a neck of the capsule 46 is broken, so that the lubricant 47 is scattered inside the tire.

Since the container housing the lubricant 47 therein is shut when the tire is not punctured, the lubricant will not be degraded with the lapse of time due to being exposed to air to be oxidized and absorbing moisture.

Further, since the lubricant 47 does not contact rubber of the tire except when the tire is punctured, the lubricant 47 will not be absorbed by or degrade the tire and will not attack rubber of the tire thereby degrading the rubber of the tire.

### (D) A structure for setting a distance between a back surface of the tire and the ceiling plate of the core in a preferable range

A distance between a back surface of the tire and the ceiling plate of the core can be in the range of about 40 - about 60 mm as shown in Table 2.

**Table 2**

| Relationship between a tire and riding comfort | | | | |
|---|---|---|---|---|
| | A distance between a tire and a core (mm) | | | |
| | 20 | 40 | 60 | 80 |
| Valuation 1 | X | Δ | ○ | ○ |
| Valuation 2 | X | ○ | ○ | ○ |
| Valuation 3 | ○ | ○ | ○ | X |
| Valuation 4 | ○ | ○ | Δ | X |

where,
Valuation 1 is for vibration with the tires properly inflated;
Valuation 2 is for noise with the tires properly inflated;
Valuation 3 is for steering looseness when running with a front tire punctured; and
Valuation 4 is for ease of tire rotation when running with a rear tire punctured.

The valuation results show results by feeling during running. Marks ○, Δ, and X indicate good, slightly poorer than normal, and not good, respectively.

By setting the distance between the back surface of the tire and the ceiling plate 10a of the core to about 40 - about 60 mm, the aforementioned problem ⑧ is solved in the following way:
Issue ⑧: By keeping a distance between the back surface of the tire and the ceiling plate 10a of the core in the range of about 40 - about 60 mm, damage to the core 10 in a properly inflated tire when traveling over a bump in the road surface is reduced, and steering looseness and vehicle deflection in running with a tire punctured are unlikely to happen. The distance of about 40 about 60 mm is applicable to a block core having no longitudinal groove 10c, also.

### Availability for industry

According to the present invention, the following effects of the run-flat core can be obtained:
(1) Since the core block is shaped as a box closed at an upper surface and having a lattice for reinforcement therein, a bearing load of the core is kept high and the core can be lightened.
(2) Since the core has a plurality of blocks which are connected to each other, a volume of each block can be small. As a result, a cost of manufacture and conveyance is reduced.
(3) When the connection between the blocks is flexible and at least one connecting portion is left unconnected as the core is mounted into the tire, insertion of the core into the tire is easy.
(4) When a belt or wire is wound at a lower position of the core to press the core to the rim, the core can be fixed so as not to float up from the rim.
(5) When loops are formed in the belt or wire and a rod having a rectangular cross section is inserted into the loops and then is rotated thereby changing a length of the belt or wire and adjusting a tension, a necessary tension can be loaded on the belt or wire by a simple procedure of only rotating the rod by 90 degrees.
(6) When the connecting portions of opposite ends of the belt or wire are connected by a linkage which is prevented from reversely rotating and the tension is adjusted by rotating an intermediate link, a necessary tension can be loaded on the belt or wire by a simple procedure of only rotating the intermediate link by 180 degrees.
(7) When the connecting portions of the opposite ends of the belt or wire are connected by a turnbuckle mechanism and a tension is adjusted by a fastening bolt driving a worm gear, a necessary tension can be loaded on the belt or wire by a simple procedure of only rotating the worm gear.
(8) When the core blocks are connected by a hinge at a lower position of the core so that the core is pressed to the rim by tension generated due to a bending reaction force of a hinge bar, both the generation of tension and connection of the blocks are performed by the hinge bar.
(9) When the hinge bar is shaped is U-shaped and a tension is obtained by rotating the hinge bar, a necessary tension can be achieved.
(10) When the hinge bar is engaged by a hook so that a tension is obtained, a necessary tension can be loaded on the connected core by a simple procedure of only engaging the hook with the hinge bar.
(11) When the right and left pressing portions are connected by a rod having a bolt head, and right and left tensions are adjusted by rotating the bolt head of the rod, tensions on the right and left sides can be adjusted at the same time.
(12) When the tension of the core is adjusted from axially outboard of the wheel, the adjusting is easy.
(13) When a balance weight is provided at a position 180 degrees opposite a tension adjusting mechanism, the wheel can be balanced in rotation, despite the tension adjusting mechanism.
(14) When a fin acting as a partitioning wall for a column within the tire is formed in the core block, noise due to columnar resonance can be reduced.
(15) When a flexible connecting structure is used, insertion of a one-piece core into the tire is easy.
(16) When the connecting structure includes a pin, by providing a large clearance between the pin and a pin hole, the connecting portion can be flexible.
(17) When the connecting structure includes a hook, the connecting portion can be flexible.
(18) When the core has one or more and five or less portions, so as to have a developed band or an arc, and is connected after being inserted into the tire, the insertion of the core into the tire is easy.
(19) When the connecting structure includes a rotational link structure including two hinge bolts, after the core is inserted into the tire, both connecting the core and tensioning the core can be easily conducted.
(20) When the connecting structure includes a buckle structure, after the core is inserted into the tire, both connecting the core and tensioning the core can be easily conducted.
(21) When the position of the shelf for pressing the core is shifted to the bottom of a longitudinal groove located at a central portion of the core block and the core block is fixedly bound by a belt or wire fitted in the longitudinal groove, the fastening portion is at one position located at a mid-width of the core. Further, since the belt or wire is in the longitudinal groove, the belt or wire will not fall off from the core. Further, since the lower ends of the right and left side walls of the core block are not bound, the core can be deformed when the tire is run while punctured. Therefore, the lower ends of the right and left side walls of the block can slip in the right and left directions relative to the rim, so that stress concentrated at the shoulder portions will be unlikely to occur. Furthermore, the position of the side walls of the core block can be shifted outboard in the right and left direction, so that a running stability of a vehicle is improved.
(22) When the position of the shelf for pressing the core is raised and the shoulder portions of the opposite ends of the shelf in the wheel circumferential direction are removed to provide a space for disposing the core fastening mechanism, a distance between adjacent core blocks can be reduced and a distance between the ceiling plates of the adjacent core blocks can be decreased. Therefore, vibration and noise to signal a punctured tire are appropriate. Furthermore, since a difference between a high position and a low position of the wheel due to the distance between the ceiling plates of the adjacent core blocks is small, the core is unlikely to stop rotating, reducing the possibility that the core will break.
(23) When the distance between the ceiling plates of the adjacent core blocks is set at about 10 - about 40 mm, vibration and noise to signal a punctured tire are appropriate. Further, since the difference between a high position and a low position of the wheel due to the distance between the ceiling plates of the adjacent core blocks is small, the core is unlikely to stop rotating, reducing the possibility that the core will break.
(24) When a lubricant housing portion having a cap is formed in the core so that at the time of a tire puncture, the lubricant is scattered inside the tire, the lubricant is housed air-tightly in the container when the tire is not punctured, and the lubricant will not be degraded with the lapse of time due to being exposed to air to be oxidized and absorbing moisture. Further, since the lubricant does not contact the rubber of the tire except when the tire is punctured, the lubricant is not be absorbed by the tire with the lapse of time and the lubricant does not attack and degrade the rubber of the tire.
(25) When a capsule housing lubricant is inserted into a hole formed in the ceiling plate of the core so that at the time of tire puncture the capsule is broken and the lubricant is scattered inside the tire, the lubricant is housed air-tightly in the capsule when the tire is not punctured, and the lubricant will not be degraded with the lapse of time due to being exposed to air to be oxidized and absorbing moisture. Further, since the lubricant does not contact the rubber of the tire except when the tire is punctured, the lubricant is not be absorbed by the tire with the lapse of time and the lubricant does not attack and degrade the rubber of the tire.
(26) When the distance between the tire and the ceiling plate of the core in a radial direction of the wheel is set to about 40 - about 60 mm, damage to the core, when the tire is properly inflated and passes over a bump in the road surface, is reduced and steering looseness and vehicle deflection when running with the tire punctured are unlikely to happen.

## Claims

1. A run-flat core (10) comprising:
a plurality of blocks (15), each of said plurality of blocks (15) having a shape of a hollow box (11) including a closed upper surface (13) and an open lower surface (14), each of said plurality of blocks (15) including a reinforcing lattice plate (12) or rib therein, wherein said run-flat core (10) is configured to be disposed outside the rim (38) of the wheel and inside a tire (50) with a vertical direction of each of said plurality of blocks (15) directed in a radial direction of said wheel and with said upper surface (13) of each of said plurality of blocks (15) directed in a radially outside direction of said wheel, and further wherein all of said plurality of blocks (15) are connected in series in the circumferential direction of said wheel,
**characterized in that** the run-flat core includes a pressing member comprising a belt (19) or wire (20) configured to press said plurality of blocks (15) to a rim (38) of a wheel and each of said plurality of blocks (15) includes a longitudinal groove (10c) formed therein which extends in the circumferential direction of said wheel and is open upwardly and is closed downwardly by a groove bottom wall, and said belt (19) or wire (20) is adapted to be wound onto said groove bottom wall and is tensionable so that said plurality of blocks (15) is bound to said wheel rim (38).

2. A run-flat core according to claim 1, wherein all of said plurality of blocks (15) have the same shape to each other.

3. A run-flat core according to claim 1 or claim 2, wherein connection between adjacent ends of said plurality of blocks is pivotal and at least one pair of adjacent ends is kept in a disconnected state until said run-flat core is inserted into said tire.

4. A run-flat core according to claim 1, wherein said belt (19) or wire (20) has connecting portions at opposite ends of said belt or wire where loops are formed at the connecting portion of the belt (19) or wire (20), and said tension of said belt or wire is adjusted by inserting a rod having a rectangular cross section into said loops of said belt or wire and rotating said rod thereby changing a length of said belt or wire.

5. A run-flat core according to claim 1, wherein said belt or wire has connecting portions (17) at opposite ends of said belt (19) or wire (20), which are connected each other via a linkage (28) including an intermediate link (29) which is rotatable in a belt or wire-tensioning direction and a belt or wire-loosening direction and is prevented from being rotated in said belt or wire-loosening direction by said tension of said belt (19) or wire (20), and said tension of said belt (19) or wire (20) is adjusted by rotating said intermediate link (29).

6. A run-flat core according to claim 1, wherein said belt (19) or wire (20) has connecting portions (17) at opposite ends of said belt (19) or wire (20), which are connected to each other via a turnbuckle (32) to which a fastening bolt having a longitudinal axis oriented in a direction perpendicular to said turnbuckle (32) by a worm gear (33) is threaded, and said tension of said belt (19) or wire (20) is adjusted by said fastening bolt, said turnbuckle (32) forming said pressing member.

7. A run-flat core according to claim 1, wherein adjacent blocks of said plurality of blocks (15) are connected to each other via a hinge including a hinge bar (22) at a lower portion of said adjacent blocks (15), and said plurality of blocks (15) are pressed to said rim (38) by a tension of said core (10) generated due to a bending reaction force of said hinge bar (22), said hinge bar (22) forming said pressing member.

8. A run-flat core according to claim 7, wherein said hinge bar (22) has a U-shaped shape and said tension of said core (10) is obtained by rotating said hinge bar (22).

9. A run-flat core according to claim 7, wherein said hinge bar (22) engages a hook (35) and said tension of said core (10) is obtained due to a bending reaction force of said hinge bar (22) generated when said hook (35) engages said hinge bar (22).

10. A run-flat core according to any one of claims 4, 5, 6 and 8, wherein right and left connecting portions (17) located at right and left sides of said core (10), respectively, are connected by a rod (24) having a bolt head (26), and by rotating said rod (24), tensions of said core (10) at right and left sides of said core are adjusted at the same time.

11. A run-flat core according to claim 10, wherein said rod (24) is directed such that said bolt head (26) is positioned outboard of said wheel in a right and left direction of said wheel, whereby said tensions of said core (10) can be adjusted from outboard of said wheel.

12. A run-flat core according to any one of claims 4, 5, 6, 8 and 9, further comprising a balance weight for balancing said wheel in rotation, disposed at a 180 degree opposite position from said connecting portions (17) about a wheel center.

13. A run-flat core according to claim 1, wherein each of said plurality of blocks (15) has fins (36) at right and left side surfaces of each of said plurality of blocks (15).

14. A run-flat core according to claim 1, wherein said core (10) has six or more blocks (15) made from synthetic resin, and adjacent blocks are pivotally connected by a connector into an annular core, or a developed linear straight core formed by cutting said annular core at one position thereof, so that said core (10) can be easily inserted into said tire (50).

15. A run-flat core according to claim 14, wherein said connector for connecting adjacent blocks (15) is constructed in a form of a pin-type connector including a pin (16) and a pin hole, and a sufficient clearance is provided between an outside diameter of said pin and an inside diameter of said pin hole so that said blocks (15) connected by said connector are smoothly pivotal to each other.

16. A run-flat core according to claim 14, wherein said connector for connecting adjacent blocks is constructed in a form of a hook-type connector including a hook (35) and a hook receiving portion, said hook (35) and hook receiving portion forming said pressing member.

17. A run-flat core according to claim 1, wherein said plurality of blocks (15) are made from synthetic resin and are made by cutting an annular core at one or more, and five or less positions into straight-shaped or arc-shaped portions, ends of said portions being connectable to each other by a connector after having been inserted into said tire (50), so that insertion of said core (10) is easy.

18. A run-flat core according to claim 17, wherein said connector for connecting said straight-shaped or arc-shaped portions includes a linkage (28) having an intermediate link (29) and two hinge bolts, and one of said two hinge bolts is dismountable, said linkage (28) forming said pressing member.

19. A run-flat core according to claim 17, wherein said connector for connecting said straight-shaped or arc-shaped portions includes a buckle having a rotatable hook (42) coupled to an instant block and a U-shaped bar (41) fixed to an opposing block (15), and said hook (42) is rotated to engage said U-shaped bar (41) and to tighten said instant block and said opposing block to each other, said buckle forming said pressing member.

20. A run-flat core according to claim 1, wherein said bottom wall of said groove (10) has an upper surface defining a shelf where each of said plurality of blocks (15) is pressed to said wheel rim (38), said groove bottom wall being distanced from an outside surface of said wheel rim (38) so as to be located at an intermediate position in the vertical direction of each of said plurality of blocks (15), and said shelf includes longitudinally opposite ends which are inclined to form a space, said core including a core fastening mechanism (32) disposed in said space between opposing shelf ends of adjacent blocks.

21. A run-flat core according to claim 1 or 20, wherein in a state that said core (10) is disposed inside said tire (50), a distance of about 10 mm - about 40 mm is provided between adjacent ends of said plurality of blocks (15) at a position of said upper surface of each of said plurality of blocks (15).

22. A run-flat core according to claim 1, further comprising a lubricant housing portion (44) formed in said plurality of blocks (15) and including a cap (45), and when said tire (50) is punctured, said cap (45) drops off so that lubricant (47) housed in said lubricant housing portion is scattered inside said tire (50).

23. A run-flat core according to claim 1, further comprising a capsule (46) housing lubricant therein, and wherein said core has a hole formed in a ceiling plate thereof, said capsule (46) being inserted into said hole, and when said tire is punctured, said capsule (46) is broken so that lubricant (47) housed in said capsule (46) is scattered inside said tire.

24. A run-flat core according to any one of claims 1, 20 and 21, wherein a distance of about 40 mm - about 60 mm is provided in a radial direction of said wheel between said tire (50) and a ceiling plate (10a) of said core (10).

25. A wheel having a wheel rim, a tire on the rim and a run-flat core according to any one of claims 1 to 24, inside the tire and fastened to the rim.

## Patentansprüche

1. Notlaufkern (10), umfassend:
eine Vielzahl an Blöcken (15), wobei jeder aus der Vielzahl an Blöcken (15) die Form eines hohlen Kastens (11) aufweist, der eine geschlossene obere Oberfläche (13) und eine offene untere Oberfläche (14) umfasst, wobei jeder aus der Vielzahl an Blöcken (15) eine Verstärkungsgitterplatte (12) oder -rippe in dieser hat, worin der Notlaufkern (10) ausgebildet ist, um außerhalb der Felge (38) des Rads und im Inneren eines Reifens (50) angeordnet zu sein, mit einer vertikalen Richtung eines jeden aus der Vielzahl an Blöcken (15), die in einer radialen Richtung des Rads ausgerichtet ist, und mit der oberen Oberfläche (13) eines jeden aus der Vielzahl an Blöcken (15), die in radialer Richtung des Rads nach außen gerichtet ist, und worin ferner alle aus der Vielzahl an Blöcken (15) in der Umfangsrichtung des Rads in Serie verbunden sind,
**dadurch gekennzeichnet, dass** der Notlaufkern ein Presselement umfasst, das einen Gurt (19) oder einen Draht (20) umfasst, der zum Pressen der Vielzahl an Blöcken (15) an eine Felge (38) eines Rads ausgebildet ist und jeder aus der Vielzahl an Blöcken (15) eine in diesem ausgebildete Längsnut (10c) umfasst, die sich in der Umfangsrichtung des Rads erstreckt und nach oben offen ist und nach unten durch eine Nutbodenwand geschlossen ist, und der Gurt (19) oder der Draht (20) ausgebildet ist, um auf die Nutbodenwand gewickelt zu sein und spannbar ist, so dass die Vielzahl an Blöcken (15) an die Radfelge (38) gebunden ist.

2. Notlaufkern nach Anspruch 1, worin alle aus der Vielzahl an Blöcken (15) die gleiche Form zueinander aufweisen.

3. Notlaufkern nach Anspruch 1 oder Anspruch 2, worin die Verbindung zwischen den angrenzenden Enden der Vielzahl an Blöcken schwenkbar ist und zumindest ein Paar angrenzender Enden in einem nicht verbundenen Zustand gehalten ist, bis der Notlaufkern in den Reifen eingeführt wird.

4. Notlaufkern nach Anspruch 1, worin der Gurt (19) oder der Draht (20) Verbindungsabschnitte an gegenüberliegenden Enden des Gurts oder des Drahts hat, wo Schleifen an dem Verbindungsabschnitt des Gurts (19) oder des Drahts (20) ausgebildet sind, und die Spannung des Gurts oder des Drahts durch Einführen eines Stabs mit rechteckigem Querschnitt in die Schleifen des Gurts oder des Drahts und Rotieren des Stabs eingestellt wird, wodurch die Länge des Gurts oder des Drahts verändert wird.

5. Notlaufkern nach Anspruch 1, worin der Gurt oder der Draht Verbindungsabschnitte (17) an gegenüberliegenden Enden des Gurts (19) oder des Drahts (20) hat, die miteinander über eine Verbindung (28), umfassend eine Zwischenverbindung (29), verbunden sind, die in einer Gurt- oder Drahtanspannungsrichtung und einer Gurt- oder Drahtlockerungsrichtung drehbar ist und in der Gurt- oder Drahtlockerungsrichtung durch die Spannung des Gurts (19) oder Drahts (20) an der Rotation gehindert wird und die Spannung des Gurts (19) oder des Drahts (20) durch Drehen der Zwischenverbindung (29) angepasst wird.

6. Notlaufkern nach Anspruch 1, worin der Gurt (19) oder der Draht (20) Verbindungsabschnitte (17) an gegenüberliegenden Enden des Gurts (19) oder des Drahts (20) aufweist, die miteinander über einen Spanner (32) verbunden sind, mit dem ein Befestigungsbolzen mit einer in einer senkrechten Richtung zum Spanner (32) durch ein Schneckenrad (33) ausgerichteten Längsachse in Gewindeeingriff ist, und die Spannung des Gurts (19) oder des Drahts (20) durch den Befestigungsbolzen eingestellt wird, wobei der Spanner (32) das Presselement ausbildet.

7. Notlaufkern nach Anspruch 1, worin angrenzende Blöcke der Vielzahl an Blöcken (15) miteinander über ein Gelenk, das eine Gelenkstange (22) an einem unteren Abschnitt der angrenzenden Blöcke (15) umfasst, verbunden sind und die Vielzahl an Blöcken (15) durch eine Spannung des Kerns (10), die aufgrund der Biegungsreaktionskraft der Gelenkstange (22) erzeugt wird, gepresst wird, wobei die Gelenkstange (22) das Presselement ausbildet.

8. Notlaufkern nach Anspruch 7, worin die Gelenkstange (22) eine U-förmige Form hat und die Spannung des Kerns (10) durch Drehen der Gelenkstange (22) erhalten wird.

9. Notlaufkern nach Anspruch 7, worin die Gelenkstange (22) in einen Haken (35) eingreift und die Spannung des Kerns (10) aufgrund einer Biegungsreaktionskraft der Gelenkstange (22) erhalten wird, die erzeugt wird, wenn der Haken (35) in die Gelenkstange (22) eingreift.

10. Notlaufkern nach einem der Ansprüche 4, 5, 6 und 8, worin der rechte und der linke Verbindungsabschnitt (17), die sich an der rechten bzw. linken Seite des Kerns (10) befinden, durch eine Stange (24) mit einem Schraubenkopf (26) verbunden sind und durch Drehen der Stange (24) die Spannungen des Kerns (10) an der rechten und linken Seite des Kerns gleichzeitig angepasst werden.

11. Notlaufkern nach Anspruch 10, worin die Stange (24) so geführt ist, dass der Schraubenkopf (26) an der Außenseite des Rads in einer rechten und linken Richtung des Rads positioniert ist, wodurch die Spannungen des Kerns (10) von der Außenseite des Rads angepasst werden können.

12. Notlaufkern nach einem der Ansprüche 4, 5, 6, 8 und 9, ferner umfassend ein Ausgleichgewicht zum Ausgleichen des sich drehenden Rads, das in einem Winkel von 180 Grad an der gegenüber den Verbindungsabschnitten (17) liegenden Position um eine Radmitte angeordnet ist.

13. Notlaufkern nach Anspruch 1, worin jeder aus der Vielzahl an Blöcken (15) Rippen (36) an der rechten und linken Seitenoberfläche jedes aus der Vielzahl an Blöcken (15) hat.

14. Notlaufkern nach Anspruch 1, worin der Kern (10) sechs oder mehr Blöcke (!5) aus synthetischem Harz hat und angrenzende Blöcke schwenkbar durch einen Verbinder in einem ringförmigen Kern oder einen entwickelten, linearen und geraden Kern, der durch Schneiden des ringförmigen Kerns an einer Position desselben ausgebildet wird, verbunden sind, so dass der Kern (10) einfach in den Reifen (50) eingebracht werden kann.

15. Notlaufkern nach Anspruch 14, worin der Verbinder zum Verbinden der angrenzenden Blöcke (15) in Form eines Verbinders vom Zapfentyp, umfassend einen Zapfen (16) und ein Zapfenloch, ausgebildet ist und ein ausreichendes Spiel zwischen einem Außendurchmesser des Zapfens und einem Innendurchmesser des Zapfenlochs bereitgestellt ist, so dass die Blöcke (15), die durch den Verbinder verbunden sind, zueinander gleitend schwenkbar sind.

16. Notlaufkern nach Anspruch 14, worin der Verbinder zum Verbinden von angrenzenden Blöcke in Form eines Verbinders vom Hakentyp, umfassend einen Haken (35) und einen Hakenaufnahmeabschnitt, ausgebildet ist, wobei der Haken (35) und der Hakenaufnahmeabschnitt das Presselement ausbilden.

17. Notlaufkern nach Anspruch 1, worin die Vielzahl an Blöcken (15) aus synthetischem Harz ist und durch Schneiden eines ringförmigen Kerns an einer oder mehreren, und fünf oder weniger Positionen in geradlinig oder bogenförmig ausgeformte Abschnitte ausgebildet wird, wobei die Enden der Abschnitte miteinander durch einen Verbinder verbindbar sind, nachdem diese in den Reifen (50) eingebracht worden sind, so dass die Einbringung des Kerns (10) einfach ist.

18. Notlaufkern nach Anspruch 17, worin der Verbinder zum Verbinden der geradlinig oder bogenförmig ausgeformten Abschnitte eine Verbindung (28) umfasst, die eine Zwischenverbindung (29) und zwei Gelenkbolzen hat, und einer der beiden Gelenkbolzen zerlegbar ist, wobei die Verbindung (28) das Presselement ausbildet.

19. Notlaufkern nach Anspruch 17, worin der Verbinder zum Verbinden der geradlinig oder bogenförmig ausgeformten Abschnitte eine Spange mit einem drehbaren Haken (42) umfasst, die mit einem Sofort-Block und einem U-förmigen Stab (41) gekoppelt ist, der an einem Gegen-Block (15) angebracht ist, und der Haken (42) gedreht wird, um in den U-förmigen Stab (41) einzugreifen und den Sofort-Block und den Gegen-Block gegeneinander anzuspannen, wobei die Spange das Presselement ausbildet:

20. Notlaufkern nach Anspruch 1, worin die Bodenwand der Nut (10c) eine obere Oberfläche zum Definieren eines Fachs hat, wo jeder aus der Vielzahl an Blöcken (15) an die Radfelge (38) gepresst wird, wobei die Nutbodenwand von einer Außenoberfläche der Radfelge (38) beabstandet ist, um an einer Zwischenposition in der vertikalen Richtung eines jeden aus der Vielzahl an Blöcken (15) positioniert zu sein, und das Fach in Längsrichtung gegenüberliegende Enden umfasst, die geneigt sind, um einen Raum zu bilden, wobei der Kern einen Kernbefestigungsmechanismus (32) umfasst, der in dem Raum zwischen den gegenüberliegenden Fachenden der angrenzenden Blöcke angeordnet ist.

21. Notlaufkern nach Anspruch 1 oder 20, worin in einem Zustand, in dem der Kern (10) im Inneren des Reifens (50) angeordnet ist, ein Abstand von etwa 10 mm - etwa 40 mm zwischen angrenzenden Enden der Vielzahl an Blöcken (15) an einer Position der oberen Oberfläche jedes aus der Vielzahl an Blöcken (15) bereitgestellt ist.

22. Notlaufkern nach Anspruch 1, ferner umfassend einen Schmiermittel-Speicherabschnitt (44), der in der Vielzahl an Blöcken (15) ausgebildet ist, und eine Kappe (45) umfasst, und wenn der Reifen (50) durchbohrt wird, die Kappe (45) sich löst, so dass das Schmiermittel (47), das in dem Schmiermittel-Speicherabschnitt vorliegt, im Inneren des Reifens (50) verteilt wird.

23. Notlaufkern nach Anspruch 1, ferner umfassend eine Kapsel (46) zum Speichern des Schmiermittels in dieser, und worin der Kern ein Loch hat, das in einer Deckenplatte desselben ausgebildet ist, wobei die Kapsel (46) in das Loch eingeführt wird, und wenn der Reifen (50) durchbohrt wird, die Kapsel (46) zerbrochen wird, so dass das Schmiermittel (47), das in der Kapsel (46) vorliegt, im Inneren des Reifens verteilt wird.

24. Notlaufkern nach einem der Ansprüche 1, 20, und 21, worin ein Abstand von etwa 40 mm - etwa 60 mm in einer radialen Richtung des Rads zwischen dem Reifen (50) und einer Deckenplatte (10a) des Kerns (10) bereitgestellt ist.

25. Rad mit einer Radfelge, einem Reifen auf der Felge und einem Notlaufkern nach einem der Ansprüche 1 bis 24, befestigt im Inneren des Reifens und an der Felge.

## Revendications

1. Noyau permettant de rouler à plat (10) comprenant :
une pluralité de blocs (15), chacun de ladite pluralité de blocs (15) ayant la forme d'une boîte creuse (11) comprenant une surface supérieure (13) fermée et une surface inférieure (14) ouverte, chacun de ladite pluralité de blocs (15) comprenant une plaque en treillis (12) ou une nervure de renforcement dans celui-ci, dans lequel ledit noyau permettant de rouler à plat (10) est configuré pour être disposé à l'extérieur de la jante (38) de la roue et à l'intérieur d'un pneu (50) avec une direction verticale de chacun de ladite pluralité de blocs (15) dirigée dans une direction radiale de ladite roue et avec ladite surface supérieure (13) de chacun de ladite pluralité de blocs (15) dirigée dans une direction radialement vers l'extérieur de ladite roue, et dans lequel en outre la totalité de ladite pluralité de blocs (15) sont reliés en série dans la direction circonférentielle de ladite roue,
**caractérisé en ce que** le noyau permettant de rouler à plat comprend un élément de pression comprenant une courroie (19) ou un câble (20) configuré pour presser ladite pluralité de blocs (15) vers une jante (38) d'une roue et chacun de ladite pluralité de blocs (15) comprend une rainure longitudinale (10c) formée dans celui-ci qui s'étend dans la direction circonférentielle de ladite roue et qui est ouverte vers le haut et qui est fermée vers le bas par une paroi inférieure de rainure, et ladite courroie (19) ou ledit câble (20) est adapté pour être enroulé sur ladite paroi inférieure de rainure et peut être tendu de sorte que ladite pluralité de blocs (15) soient reliés à ladite jante de roue (38).

2. Noyau permettant de rouler à plat selon la revendication 1, dans lequel la totalité de ladite pluralité de blocs (15) ont la même forme.

3. Noyau permettant de rouler à plat selon la revendication 1 ou la revendication 2, dans lequel la liaison entre les extrémités adjacentes de ladite pluralité de blocs est pivotante et au moins une paire d'extrémités adjacentes est maintenue dans un état séparé jusqu'à ce que ledit noyau permettant de rouler à plat soit inséré dans ledit pneu.

4. Noyau permettant de rouler à plat selon la revendication 1, dans lequel ladite courroie (19) ou ledit câble (20) comporte des parties de liaison aux extrémités opposées de ladite courroie ou dudit câble où des boucles sont formées au niveau de la partie de liaison de la courroie (19) ou du câble (20), et ladite tension de ladite courroie ou dudit câble est ajustée en insérant une tige ayant une section rectangulaire dans lesdites boucles de ladite courroie ou dudit câble et en faisant tourner ladite tige, modifiant de ce fait une longueur de ladite courroie ou dudit câble.

5. Noyau permettant de rouler à plat selon la revendication 1, dans lequel ladite courroie ou ledit câble comporte des parties de liaison (17) aux extrémités opposées de ladite courroie (19) ou dudit câble (20), qui sont reliées l'une à l'autre par l'intermédiaire d'une tringlerie (28) comprenant un maillon intermédiaire (29), qui est capable de tourner dans une direction de tension de courroie ou de câble et une direction de détente de courroie ou de câble et dont la rotation est empêchée dans ladite direction de détente de courroie ou de câble par ladite tension de ladite courroie (19) ou dudit câble (20), et ladite tension de ladite courroie (19) ou dudit câble (20) est ajustée en faisant tourner ledit maillon intermédiaire (29).

6. Noyau permettant de rouler à plat selon la revendication 1, dans lequel ladite courroie (19) ou ledit câble (20) comporte des parties de liaison (17) aux extrémités opposées de ladite courroie (19) ou dudit câble (20), qui sont reliées l'une à l'autre par l'intermédiaire d'un tendeur (32) auquel un boulon de fixation ayant un axe longitudinal orienté dans une direction perpendiculaire audit tendeur (32) par un engrenage à vis sans fin (33) est vissé, et ladite tension de ladite courroie (19) ou dudit câble (20) est ajustée par ledit boulon de fixation, ledit tendeur (32) formant ledit élément de pression.

7. Noyau permettant de rouler à plat selon la revendication 1, dans lequel les blocs adjacents de ladite pluralité de blocs (15) sont reliés les uns aux autres par l'intermédiaire d'une articulation comprenant une barre d'articulation (22) au niveau d'une partie inférieure desdits blocs (15) adjacents, et ladite pluralité de blocs (15) sont pressés vers ladite jante (38) par une tension dudit noyau (10) générée du fait d'une force de réaction à la flexion de ladite barre d'articulation (22), ladite barre d'articulation (22) formant ledit élément de pression.

8. Noyau permettant de rouler à plat selon la revendication 7, dans lequel ladite barre d'articulation (22) a une forme en U et ladite tension dudit noyau (10) est obtenue en faisant tourner ladite barre d'articulation (22).

9. Noyau permettant de rouler à plat selon la revendication 7, dans lequel ladite barre d'articulation (22) vient en prise avec un crochet (35) et ladite tension dudit noyau (10) est obtenue du fait d'une force de réaction à la flexion de ladite barre d'articulation (22) générée lorsque ledit crochet (35) vient en prise avec ladite barre d'articulation (22).

10. Noyau permettant de rouler à plat selon l'une quelconque des revendications 4, 5, 6 et 8, dans lequel des parties de liaison droite et gauche (17) situées des côtés droit et gauche dudit noyau (10), respectivement, sont reliées par une tige (24) comportant une tête de boulon (26), et en faisant tourner ladite tige (24), les tensions dudit noyau (10) des côtés droit et gauche dudit noyau sont ajustées simultanément.

11. Noyau permettant de rouler à plat selon la revendication 10, dans lequel ladite tige (24) est dirigée de sorte que ladite tête de boulon (26) soit positionnée en-dehors de ladite roue dans une direction à droite et à gauche de ladite roue, moyennant quoi lesdites tensions dudit noyau (10) peuvent être ajustées à partir de l'extérieur de ladite roue.

12. Noyau permettant de rouler à plat selon l'une quelconque des revendications 4, 5, 6, 8 et 9, comprenant en outre une masse d'équilibrage pour équilibrer ladite roue en rotation, disposée à une position opposée à 180° auxdites parties de liaison (17) autour d'un centre de roue.

13. Noyau permettant de rouler à plat selon la revendication 1, dans lequel chacun de ladite pluralité de blocs (15) comporte des ailettes (36) au niveau des surfaces latérales droite et gauche de chacun de ladite pluralité de blocs (15).

14. Noyau permettant de rouler à plat selon la revendication 1; dans lequel ledit noyau (10) comporte six blocs (15) ou plus réalisés en résine synthétique, et les blocs adjacents sont reliés de manière pivotante par une liaison en un noyau annulaire, ou un noyau droit linéaire développé formé en découpant ledit noyau annulaire à une position de celui-ci, de sorte que ledit noyau (10) puisse être inséré facilement dans ledit pneu (50).

15. Noyau permettant de rouler à plat selon la revendication 14, dans lequel ladite liaison pour relier les blocs (15) adjacents est réalisée en la forme d'une liaison de type broche comprenant une broche (16) et un trou de broche, et un jeu suffisant est prévu entre un diamètre extérieur de ladite broche et un diamètre intérieur dudit trou de broche de sorte que lesdits blocs (15) reliés par ladite liaison puissent pivoter régulièrement les uns par rapport aux autres.

16. Noyau permettant de rouler à plat selon la revendication 14, dans lequel ladite liaison pour relier les blocs adjacents est réalisée en la forme d'une liaison du type crochet comprenant un crochet (35) et une partie de réception de crochet, lesdits crochet (35) et partie de réception de crochet formant ledit élément de pression.

17. Noyau permettant de rouler à plat selon la revendication 1, dans lequel ladite pluralité de blocs (15) sont réalisés en résine synthétique et sont réalisés en découpant un noyau annulaire à une ou plusieurs, et cinq positions ou moins en des parties droites ou en forme d'arcs, les extrémités desdites parties pouvant être reliées les unes aux autres par une liaison après avoir été insérées dans ledit pneu (50), de sorte que l'insertion dudit noyau (10) s'effectue facilement.

18. Noyau permettant de rouler à plat selon la revendication 17, dans lequel ladite liaison pour relier lesdites parties droites ou en forme d'arcs comprend une tringlerie (28) comportant un maillon intermédiaire (29) et deux boulons d'articulation, et l'un desdits boulons d'articulation peut être retiré, ladite tringlerie (28) formant ledit élément de pression.

19. Noyau permettant de rouler à plat selon la revendication 17, dans lequel ladite liaison pour relier lesdites parties droites ou en forme d'arcs comprend une boucle comportant un crochet (42) rotatif accouplé à un bloc immédiat et une barre en U (41) fixée à un bloc (15) opposé, et ledit crochet (42) est tourné pour venir en prise avec ladite barre en U (41) et pour serrer ledit bloc immédiat et ledit bloc opposé l'un avec l'autre, ladite boucle formant ledit élément de pression.

20. Noyau permettant de rouler à plat selon la revendication 1, dans lequel ladite paroi inférieure de ladite rainure (10c) comporte une surface supérieure définissant une plaque où chacun de ladite pluralité de blocs (15) est pressé vers ladite jante de roue (38), ladite paroi inférieure de rainure étant éloignée d'une surface extérieure de ladite jante de roue (38) de manière à être située à une position intermédiaire dans la direction verticale de chacun de ladite pluralité de blocs (15), et ladite plaque comprend des extrémités longitudinalement opposées qui sont inclinées pour former un espace, ledit noyau comprenant un mécanisme de fixation de noyau (32) disposé dans ledit espace entre les extrémités de plaque opposées de blocs adjacents.

21. Noyau permettant de rouler à plat selon la revendication 1 ou 20, dans lequel, dans un état où ledit noyau (10) est disposé à l'intérieur dudit pneu (50), une distance d'environ 10 mm à environ 40 mm est prévue entre les extrémités adjacentes de ladite pluralité de blocs (15) à une position de ladite surface supérieure de chacun de ladite pluralité de blocs (15).

22. Noyau permettant de rouler à plat selon la revendication 1, comprenant en outre une partie de logement de lubrifiant (44) formée dans ladite pluralité de blocs (15) et comprenant un couvercle (45), et lorsque ledit pneu (50) est perforé, ledit couvercle (45) descend de sorte que le lubrifiant (47) logé dans ladite partie de logement de lubrifiant est diffusé à l'intérieur dudit pneu (50).

23. Noyau permettant de rouler à plat selon la revendication 1, comprenant en outre une capsule (45) logeant du lubrifiant dans celle-ci, et dans lequel ledit noyau comporte un trou formé dans une plaque supérieure de celui-ci, ladite capsule (46) étant insérée dans ledit trou, et lorsque ledit pneu est perforé, ladite capsule (46) est brisée de sorte que le lubrifiant (47) logé dans ladite capsule (46) est diffusé à l'intérieur dudit pneu.

24. Noyau permettant de rouler à plat selon l'une quelconque des revendications 1, 20 et 21, dans lequel une distance d'environ 40 mm à environ 60 mm est prévue dans une direction radiale de ladite roue entre ledit pneu (50) et une plaque supérieure (10a) dudit noyau (10).

25. Roue comportant une jante de roue, un pneu sur la jante et un noyau permettant de rouler à plat selon l'une quelconque des revendications 1 à 24 à l'intérieur du pneu et fixé à la jante.
